# EUROPÄISCHE PATENTSCHRIFT

(11) **EP 1 506 048 B1**
(45) Veröffentlichungstag und Bekanntmachung des Hinweises auf die Patenterteilung: **27.12.2006**
(21) Anmeldenummer: 03708029.8
(22) Anmeldetag: 13.02.2003
(51) Int. Cl.: B01D 25/26

(54) **FILTERVORRICHTUNG IN SEGMENTBAUWEISE**
FILTER DEVICE WITH A SEGMENTED DESIGN
ENSEMBLE FILTRE A STRUCTURE SEGMENTEE

(30) Priorität: 08.05.2002 DE 10220644
(43) Veröffentlichungstag der Anmeldung: 16.02.2005
(73) Patentinhaber: Kemmelmeyer, Werner H., 83101 Thansau (DE)
(72) Erfinder: Kemmelmeyer, Werner H., 83101 Thansau (DE)
(74) Vertreter: Neidl-Stippler, Cornelia
(86) Internationale Anmeldenummer: PCT/DE2003/000437
(87) Internationale Veröffentlichungsnummer: WO 2003/095064

(56) Entgegenhaltungen:
- EP-A- 0 152 903
- DE-A- 19 837 257
- GB-A- 926 600
- US-A- 3 343 681

## Beschreibung

Die Erfindung betrifft eine Filtervorrichtung mit aufgereihten, im wstl. zylinderförmigen, radial abwechselnd von außen oder innen anströmbaren Elementen und zwischen jeweils zwei dieser Elemente angeordnetem ringförmigem Filtermaterial. Gattungsgemäße Filtervorrichtungen sind in EP 0152903 B1 beschrieben.

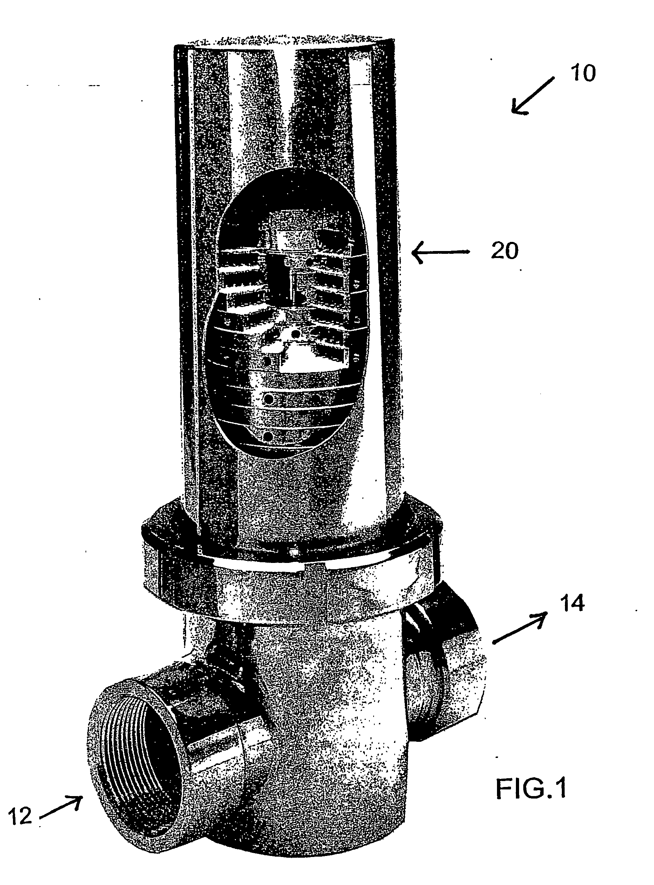

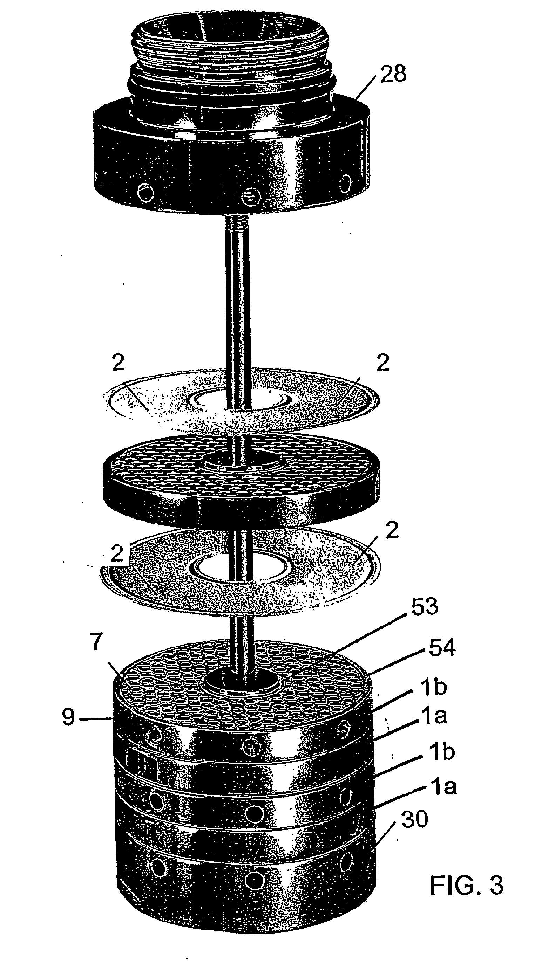

Dabei wird ringförmiges blattartiges Filtermaterial aus stirnseitigen Öffnungen hohlzylindrischer Anströmelemente, die auf einer Fluidleitung für zu filterndes Fluid aufgereiht und mit dieser verbunden sind, mit zu filterndem Fluid durchströmt und das Filtrat über stirnseitige Öffnungen in hohlzylindrische Ableitungselemente weitergeleitet und aus diesen in eine Filtratkammer weitergeleitet. Die Elemente sind bevorzugt aus langlebigem Material, wie Metall, insbesondere Stahl, oder Kunststoff gefertigt und schließen zwischen sich jeweils ein Filtermaterialblatt ein, das bei Erschöpfung ausgewechselt werden kann.
Ein gattungsgemäßes Filter ist in Fig.1 und 3 perspektivisch dargestellt.

An Filtervorrichtungen dieser Art werden sehr hohe Anforderungen gestellt. Neben einer gesicherten, vollständigen Erfüllung der geforderten Filtrierungsleistungen, muß ein zuverlässiger, störungsfreier Betrieb gewährleistet werden können, da ein Ausfall der Filtervorrichtung nicht nur zu unbrauchbaren Produkten führt, sondern damit auch enorme Stillstandsverluste verbunden sind. Gattungsgemäße Filtervorrichtungen können auf den verschiedensten Gebieten eingesetzt werden, so zum Ausfiltern von Feststoffen oder aber Flüssigkeiten aus Gasen, bspw. zum Abscheiden von Öl aus Druckluft (Ölabscheider), zum Entfernen von Mikroorganismen aus Getränken, aus Nährbouillons von Fermentern und dergleichen mehr. Hierbei müssen diese Filtervorrichtungen Temperaturen bis zu 200, teilweise bis zu 300 °C und Drücke im Bereich von 16 bar bis zu 20 oder sogar 30 bar aushalten. Sie dürfen auch nicht ausfallen, wenn die Auslegungsleistung, unter Umständen kurzfristig, einmal um das doppelte oder gar dreifache überschritten wird.

Insbesondere bei der Herstellung von Lebensmitteln und Getränken, wie etwa in Brauereien, muß neben den zuvor angesprochenen Anforderungen häufig auch sichergestellt werden, daß die Filtrate nach Durchgang durch den Filter steril sind. Bei einem Ausfall der Sterilisierungswirkung, was nicht immer unmittelbar zu erkennen ist, können erhebliche Produktionsmengen unbrauchbar werden.

Ein Problem der Filteranlagen nach dem Stand der Technik besteht in der Abdichtung der Filtermaterialscheiben gegenüber den Anström- und Ableitungselementen. Bisher werden die Filtermaterialscheiben durch einen jeweils innen und außen umlaufenden im wstl. planen umlaufenden Dichtrand zwischen den Anström- und Ableitungselementen gehalten, wobei die Elemente aufeinandergepresst werden, um durch den Preßdruck eine Abdichtung zu gewährleisten. Bei einer bevorzugten Ausführungsform wird durch einen durch die Mittelachse des Filters verlaufenden Zuganker der Elementstapel aufeinandergepreßt und das Filtermedium an den Randbereichen abgedichtet.

Es hat sich bei den bekannten gattungsgemäßen Filteranlagen gezeigt, daß bei der Montage ein Verdrehen der ringscheibenartigen Anströmelemente gegeneinander möglich ist und dadurch eine Beschädigung und in Einzelfällen sogar ein Abscheren der Filtermembranen erfolgen kann. Die Halterung der Filtermembranscheiben im Abdichtbereich hat in der Vergangenheit bei hoher Belastung auch zu einer Kanalbildung und zu Undichtigkeit geführt. Dies trat insbeondere dann auf, falls bei erhöhtem Druck das Fluid ungehindert einen Weg im weichen Membranmaterial ausbilden kann. Die Dichtigkeit der Membranen gegenüber den Elementen war daher noch verbesserungsfähig.

Demgegenüber ist es Aufgabe der Erfindung, eine gattungsgemäße Filtervorrichtung so zu verbessern, daß die Abdichtung der Filterelemente verbessert wird.

Die Aufgabe wird erfindungsgemäß gelöst durch eine Filtervorrichtung mit im wstl. hohlzylinderförmigen, abwechselnd übereinandergestapelten, Innenringwandöffnungen aufweisenden Filterelementen und Außenringwandöffnungen aufweisenden Filterelementen; einem Außengehäuse ; das mit Außenringwänden der Füterelemente eine Außengehäuse-Fluidkammer bildet, die in einer zweiten Fluidleitung endet; einer Filterinnenleitung, die durch die Innenringwände der Filterelemente gebildet ist und durch die Innenringwandöffnungen mit Filterelementen sowie einer ersten Fluidleitung verbunden ist; zwischen jeweils zwei dieser- Filterelemente angeordnetem im wstl. ringförmigem Filtermaterial; wobei die Filterelemente im wstl. hohlzylinderförmig sind und eine Innenringwand, eine Außenringwand sowie eine obere und eine untere Stirnfläche mit Öffnungen aufweisen, wobei die Filterelemente entweder an ihrer radialen Außenwand oder Innenwand Öffnungen aufweisen; wodurch Flüssigkeitsleitung von der Innenleitung des Filters durch Innenwandöffnungen in der Innenwand der hohlzylinderförmigen Filterelemente und durch die stirnseitigen Öffnungen derselben durch das ringförmige Filtermaterial und durch die stirnseitigen Öffnungen in das nächste, Außenöffnungen aufweisende hohlzylinderförmige Filterelement und über dessen im Außenwand angeordnete Öffnungen in den Filtratraum bzw. Gehäusekammer bzw. in Strömungsumkehr eine Fluidleitung von Außen zur Innenleitung herstellbar ist, einem Deckelteil zum dichten Abschluß des obersten Filterelementes; und einem Bodenteil zum Abschluß des untersten Filterelementes; wobei die Stirnflächen der Filterelemente im wstl. plane periphere Außen- und Innendichtflächen aufweisen, die bei Aufeinanderliegen der Filterelemente unter Einklemmen von Filtermaterial dazwischen übereinander zu liegen kommen und uneben sind.

Wie bereits ausgeführt, ist es für eine Filtervorrichtung der hier in Rede stehenden Art von großer Bedeutung, vollständig dicht zu sein, d. h. auszuschließen, daß das filtrierende Fluid in irgendeiner Weise die Filtervorrichtung ohne Filtrierung durchsetzt, also etwa im "Bypass" das Filtermaterial umgeht. Hierzu ist von, besonderer Bedeutung, daß das Filtermaterial insbesondere bei einer Filtervorrichtung, wie sie weiter vorne beschrieben ist, dichtend zwischen den Elementen, d. h. zwischen den jeweiligen Außen- und Innenringwanden gehaltert ist. Grundsätzlich kann dies dadurch unterstützt werden, daß die Elemente an ihrem äußeren und inneren Rand mit einer abdichtenden Einfassung umgeben werden.

Dadurch, daß nun unebene bzw. aufgerauhte Dichtflächen vorgesehen werden, wird die Verdrehung der Elemente gegenüber dem Filtermaterial vermieden und dadurch eine Beschädigung der Membran durch die Drehbewegung verhindert. Ferner kann dadurch eine Kanalbildung unterbunden werden, da sich in dem Dichtbereich unterschiedliche Dichten des Filtermaterials durch den geringfügig geringeren Preßdruck ausbilden. Unter Unebenheit werden hier Rauhigkeiten verstanden, die die zwischenliegende Membran nicht verletzen, aber insoweit eine Einprägung vornehmen, daß ein Verdrehen der Membran vermieden wird. Auch die Kanalbildung wird unterbunden, da die Rauhigkeiten die Membran durch die Prägung verfestigen.

Die Lehre der Erfindung auch dahin, das Filtermatierial - mit oder ohne Siebkörper - im Dichtring unverdrehbar zu befestigen, da bei einer Drehung der Filterelemente bspw. beim Anziehen des Zugankers, die Membranen manchmal beschädigt und sogar abgeschert werden. Das Filtermaterial - mit oder ohne Stütz-Siebkörper - wird gemäß der Lehre durch die Rauhigkeit der Dichtflächen geprägt und liegt dann unverdrehbar auf der entsprechenden Fläche bzw. dem entsprechenden umlaufenden Bereich auf. Genauso unverdrehbar wird das Element auf der Membran gehalten. Femer kann eine erwünschte Elastizität für einen zuverlässig dichtenden Abschluß zwischen den Elementen und den dazwischengeschalteten Filtermaterialien, wie weiter unten noch im einzelnen ausgeführt ist, erhalten werden.

Es ist bearbeitungstechnisch günstig, falls die Unebenheiten der Außen und Innendichtflächen im wstl. gleich sind. Als Verfahren zur Herstellung der Unebenheiten der Dichtflächen bietet sich bspw. Sandstrahlen, Kugelstrahlen, Laserbearbeitung, Fräsen oder jedes andere, dem Fachmann geläufige Bearbeitungsverfahren für das Material der Dichtränder an. Es ist lediglich wesentlich, daß die Unebenheiten nicht so hoch sind, daß sie das Filtermaterial durchstoßen oder ernsthaft verletzen - sie müssen so hergestellt sein, daß nur eine Prägung des Dichtbereichs der Membran erfolgt, aber kein Durchstoßen oder Anschneiden derselben. Die Wahl der Rauhigkeit hängt bis zu einem gewissen Grad auch von dem verwendeten Filtermaterial ab - Filterma-terialien mit leichter Disintegrierbarkeit vertragen weniger Rauhigkeit als hochela-stische, dehnbare und zugfeste Materialien, wie PTFE oder Aramid.

Es ist bearbeitungstechnisch sinnvoll, daß die Unebenheiten der Außen- und Innendichtflächen im wstl. gleicher Rauhigkeit sind.

Zur Abstützung des Filtermaterials und Fenhaltens von groben Verunreinigungen kann es empfehlenswert sein, in Strömungsrichtung dem Filtermaterial zumindest einen Siebkörper vor- oder nachzuschalten. Es kann fertigungstechnisch sinnvoll sein, die zylinderförmigen Filterelemente mehrteilig aufzubauen, zumindest aus einem Innen- und einem Außenring sowie ggf. einem oder mehreren Siebkörpern. Es kann auch sinnvoll sein, daß zumindest ein Siebkörper auf die Stirnfläche auflegbar ist. Bevorzugt kann sein, daß das Filtermaterial mit Abstand zum Siebkörper angeordnet ist. In Strömungsrichtung kann dem Filtermaterial zumindest ein Siebkörper vor- oder nachgeschaltet sein - dadurch können grobe Verunreinigungen vorgefiltert werden.

Es kann günstig sein, daß die Filterelemente, das Gehäuse sowie das Deckel- und Bodenteil zumindest teilweise aus Kunststoff hergestellt sind. Dieses hat den Vorteil der einfachen und preisgünstigen Herstellung. Es kann aber für Filter mit besonders langen Standzeiten oder aber hoher mechanischer Belastung sinnvoll sein, daß die Filterelemente, das Gehäuse sowie das Deckel- und Bodenteil zumindest teilweise aus Metall, wie Stahl, hergestellt sind.

Bei einer bevorzugten Ausführungsform ist das zylinderförmige Element mehrteilig aufgebaut zumindest aus einem innen- und einem Außenring (sowie ggf. einem oder mehreren Siebkörpern. Dabei kann zumindest ein Siebkörper in die Außenringwand und/oder die Innenringwand einrastbar sein. Das Filtermaterial kann mit Abstand zum Siebkörper angeordnet sein - es kann aber auch auf diesem zumindest teilweise aufliegen.

Das ringförmige Filtermaterial kann einzeln oder in Kombination Keramik, Metall; natürliche oder synthetische Polymere, Kunstharz-lonenaustauscher, Polymere halogenierter Kohlenwasserstoffe, Teflon, Porzellan, Glas, Metall., Papier, Cellulose, Filz, Leder, Asbest, Glas, Sägemehl, Bimsstein, Titandioxid, aufweisen und ggf. zwei- oder mehrschichtig sein. Dabei kann es aufgrund des Filtermaterials notwendig sein, die Filtemembran so auszugestalten, daß sie aus unterschiedlichen Materialien besteht - so kann bspw. ein sandwhichartiger Aufbau erwünscht sein oder aber eine Anordnung, bei der die Filtermembran einen Haltebereich anderer Zusammensetzung als den Filterbereich aufweist. Das ringförmige Filtermaterial kann in bestimmten Anwendüngsfällen, bspw. bei lonentauscherharzen, regenerier-bar sein. Das Filtermaterial wirkt in seinen gesamten Randbereichen abdichtend mit den Elementen oder Elementen zusammen. Durch die Lehre, das Filtermaterial in seinem gesamten Randbereich mit oder gegenüber den hohlzylinderförmigen Elementen durch die unebene Dichtfläche abzudichten, ist es möglich, bei einer gattungsgemäßen Filtervorrichtung die oben genannten Nachteile zu vermeiden. Bei druckempfindlichem Filtermaterial, wie Glasfritten oder anderen spröden Materialien kann es sinnvoll sein, daß das flächige Filtermaterial einen Haltebereich anderer Zusammensetzung als in einem Filterbereich aufweist.

Zur Sicherstellung des Preßdrucks auf den Elementverbund, der wesentlich für die Dichtigkeit des Filters ist, ist bevorzugt, daß in der Innenleitung ein Zuganker, auf dem die hohlzylinderförmigen Filterelemente und das ringförmige Filtermaterial aufgesteckt sind und der in der oberen Abdeckkappe und der unteren Abdeckkappe befestigt ist und so den Filterelement/Filtermaterialstapel verspannt, ausgebildet ist. Dieser kann bspw.. in Form einer Langschraube vorliegen kann und ggf. mit einer Druckfeder unter Zug gehalten werden. Das Vorsehen eines Zugankers ist aber nicht wesentlich - es kann jegliche andere Maßnahme ergriffen werden, die ein Aufeinanderdrücken des Filtelelementstapels unter Abdichtung des Verbundes durch das Aufeinanderpressen der Dichtflächen gewährleistet, wie sie dem Fachmann geläufig ist.

Es kann dann - falls bspw. die Filterelemente keine ausreichende Stabilität gegenüber dem Druck, der auf die Elemente aufgebracht werden muß, aufweisen, sinnvoll sein, daß die zylinderförmigen Elemente radial zur Achse der Innenleitung und senkrecht zu den Stirnflächen der Elemente verlaufende Stützwände aufweisen.

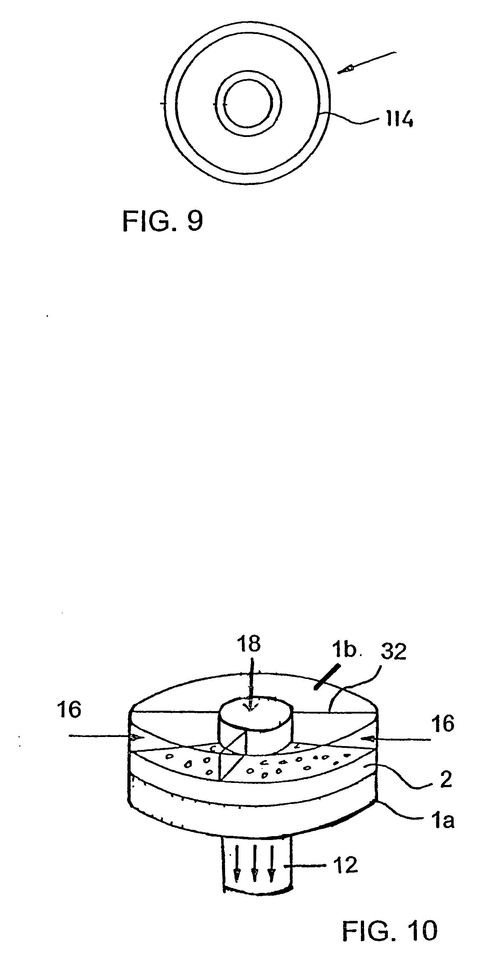

Die Öffnungen in mindestens einer Stirnfläche der hohlzylinderförmigen Elemente, durch die dann das Filtermaterial angeströmt wird oder das Filtrat in ein Filterelement eintritt, kann bspw. lochartig und/oder schlitzförmig (s. Fig. 8) und/oder siebartig sein.

Beim Montieren des Filters - d.h. dem Übereinandersetzen der einzelnen Anströmelemente und Festziehen des Anströmelementeverbundes liegen die aufgerauhten Oberflächen des Dichtbereichs benachbarter Anströmelemente auf den gegenüberliegenden Seiten einer Filtermaterialscheibe, die durch die Unebenheiten örtlich komprimiert und befestigt wird, sodaß ein Verdrehen des Filtermaterials gegen die Anströmelemente und ein Verdrehen der Anströmelemente gegeneinander vermieden wird.

Jedes Filterelement, das als Strömungsleütelement wirkt, besitzt mindestens eine Einströmöffung oder mindestens eine Ausströmöffnung, die in der Innenwand oder in der Außenwand gebildet ist, sowie Filtermaterialzugänge, aus diesen wird in der erfindungsgemäßen Filtervorrichtung das "Filter"-Medium angeströmt, wobei dann das gereinigte Filtrat in den Filtratraum der Filtervorrichtung aus den Ausströmöffnungen abgezogen wird.

Bei Strömungsrichtungsumkehr - die bspw. zur "Reinigung" eines Filters durchgeführt werden kann, strömt das zu filtrierende Fluid von außen nach innen.

Hier soll unter bezug auf die zunächst beschriebene Strömungsrichtung mit Innenwand der Abschlußbereich jedes Filterelementes nach innen bezeichnet sein, also bei dem bekannten Doppelrohr-Aufbau der der Innenröhre entsprechende Bereich. Des gleichen soll unter Außenwand der mit der Röhre größeren Durchmessers übereinstimmende Bereich bezeichnet sein. Die Einströmöffnung in der Außenwand bzw. die Auströmöffnung in der Innenwand führt dazu, daß jeweils eine definierte "Kammer" geschaffen ist, in die einmal das Filtrat von innen einströmt, umgelenkt wird und dann ein darüber oder darunter befindliches Filterscheibe durchsetzt. Eine so gebildete Kammer, die im übrigen über den Umfang verteilt Ausströmöffnungen oder Einströmöffnungen aufweisen kann, verfügt oben und unten über innere und äußere umlaufende aufgerauhte Dichtflächen oder Dichtleisten, gegen die die Elemente etwa dichtend anpreßbar sind.

In besonderen Fällen - bspw. bei Vorliegen von hochfesten Membranen, wie Keramik- oder hochfesten Kunststoffmembranen (Nylon, fluorierte Kohlenwasserstoffe, Aramide etc.) kann aber auch das Filtermaterial als solches schon ausreichen, ein Sieb- oder Stützkörper also nicht notwendig sein.

Das Element einer erfindungsgemäßen Filtervorrichtung kann grundsätzlich einstückig ausgebildet. Fertigungsmäßig empfiehlt es sich aber, das Element in Form eines Innen- und einer Außenringwand herzustellen, die durch Siebkörper miteinander verbunden werden. Der Siebkörper kann hierzu an seinem Innen seinem Außenrand mit dem Innen- und Außenrand verschweißt oder verklebt sein. Besonders dann, wenn vor und hinter dem Filtermaterial ein Siebkörper angeordnet sein soll, empfiehlt es sich, den Siebkörper lösbar mit dem Innen- und dem Außenringwand zu verbinden, etwa durch eine Verschraubung. Auch könnte sich bspw. ein Einklemmen durch Klemmschrauben empfehlen.

Von ganz entscheidender Bedeutung für die Dichtigkeit der Filtervorrichtung, das dichtende Zusammenwirken der Elemente mit dem Filtermaterial, ist es, daß bei allen Elementen, allen Innen- und Außenringwanden der Elemente, jeweils der notwendige Druck zwischen benachbarten Elementen herrscht, um die dichtende Pressung des Filtermaterials sicherzustellen- Insbesondere wenn relativ dünnes Filtermaterial verwendet wird, das zudem noch relativ wenig dehnungsfähig ist, kann durch Setzungserscheinungen der Druck zwischen Außen- oder Innenringwanden der Elemente entscheidend nachlassen.

Zum Zusammenhalt der Elemente wird üblicherweise die obere und untere Halterung der Elemente mit einem Zuganker gegeneinander verspannt. Der Zuganker kann bspw. eine durch die Mitte der Filtervorrichtung, zusammenfallend mit der Achse der Filtervorrichtung, geführte Langschraube sein, die die untere und obere Halterung für die Elemente gegeneinander verspannt.

Eine erfindungsgemäße Filtervorrichtung, wie sie zuvor beschrieben ist, kann grundsätzlich mit verschiedenem Filtermaterial betrieben werden. Da die Durchflußleistung auch eine Funktion der zur Vefrügung stehenden Filterfläche ist, ist es vorteilhaft, in einer Raumeinheit möglichst viele Filtereinheiten unterzubringen. Eine ökonomische Raumnutzung wird gefördert von relativ Elementen. Um diesem nachzukommen lehrt die Erfindung weiterhin, in Filtervorrichtungen der hier in Rede stehenden Art, insbesondere in einer Filtervorrichtung mit einem oder mehreren der zuvor beschriebenen Merkmale, als Filtermaterial Kunststoffmernbranen zu verwenden. Das Ausgangsmaterial für solche Membranen wird bspw. auch unter dem Warenzeichen GORE-TEX vertrieben. Ein derartiges Filtermaterial besteht aus einer Membrane, die filteraktiv ist.

Vorteilhafte Ausgestaltungen der Erfindung ergeben sich aus den Unteransprüchen sowie der nachfolgenden Beschreibung der lediglich Ausführungsbeispiele darstellenden beigefügten Zeichnung, auf der zeigt
Fig. 1 eine teilweise geschnittene Ansicht eines Ausführungsbeispiels einer erfindungsgemäßen Filtervorrichtung
Fig. 2 eine prinzipielle Darstellung des Fluidverlaufs in einer erfindungsgemäßen Filtervorrichtung;
Fig. 3 eine perspektivische Ansicht der Filtereinrichtung der -Fig. 1 mit abgenommenem Gehäuse
Fig. 4 zwei Elemente einer erfindungsgemäßen Filtervorrichtung mit einer zwischenliegenden Filtermembran in vergrößerter Darstellung;
Fig . 5 eine alternative Ausführungsform eines erfindungsgemäßen Elementes,
Fig. 6 ein alternatives Element, welches nach innen offen und zur Außenleitung geschlossen ist;
Fig. 7 eine Draufsicht auf ein Element gemäß Fig. 4 und Fig. 5, mit Stützwänden;
Fig. 8 ein weiteres alternatives Element mit schlitzförmigen Öffnungen in den Stirnflächen in der Draufsicht;
Fig. 9 Filtermaterial in der Draufsicht; und
Fig. 10 schematisch das Anströmen des Filtermaterials in einer Filtervorrichtung zwischen zwei Filterelementen.

Dargestellt und beschrieben ist eine Filtervorrichtung 10 für Fluide, also zur Filterung von Gasen, Flüssigkeiten od. dgl. in verfahrenstechnischen Anlagen, wie das im einzelnen weiter oben zu Beginn ausgeführt ist. Besonders eignet sich die Filter vorrichtung für die Gasfiltration. Ein Beispiel von erfindungsgemäßen Filtern, wie sie in Fig. 1 dargestellt sind; sind Ölabscheider, Wasserabscheider, Ionenaustauscher und ähnliches.

In Fig. 1 ist eine perspektivische Darstellung einer bevorzugten Ausgestaltung einer erfindungsgemäßen Vorrichtung dargestellt, wobei ein Fenster in das Gehäuse 20 geschnitten ist. Man erkennt deutlich die abwechselnd übereinanderliegenden Elemente mit siebartigen Stirnflächen 7 und abwechselnd äußeren und inneren Öffnungen, die einen Eintritt von Fluid aus der Innenleitung 18 oder der Gehäusekammer 16, die zwischen den Außenringwänden 9 und dem Gehäuse 20 gebildet ist, ermöglichen.

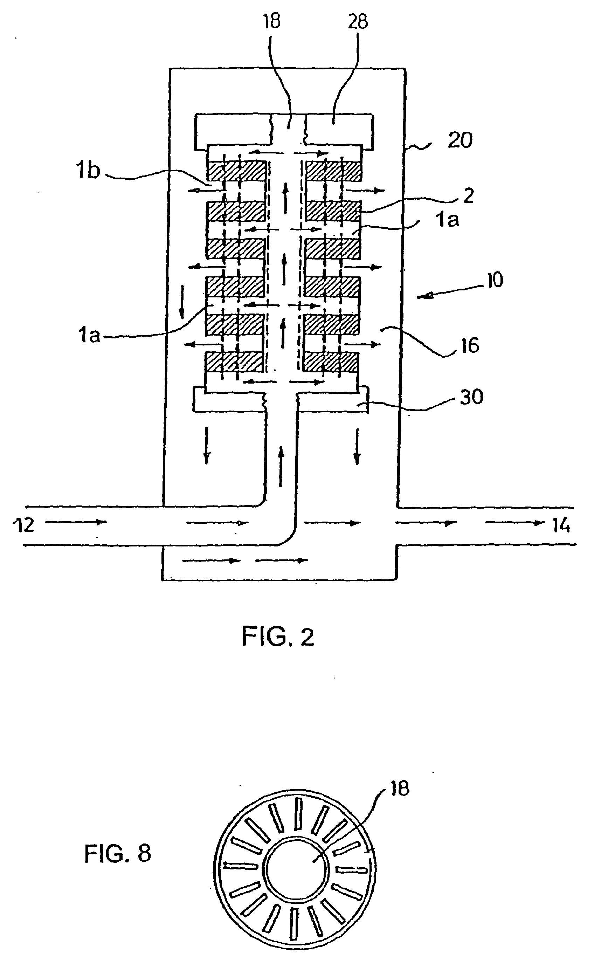

In Fig. 2 ist der Fluidfluß in der Filtervorrichtung 10 schematisch dargestellt, wobei hier der Zufluß von zu filtrierendem Fluid über die Innenleitung 18 erfolgt und der Abfluß gefilterten Fluids aus der Gehäusekammer 16. Man erkennt deutlich, daß das zu filtrierende Fluid durch die Zuführleitung 12 in die Filtervorrichtung 10 gelangt, durch die Innenwandöffnungen 4 die Elemente 1a durchsetzt, dann durch die auf der Stirnwand 7 mit Öffnungen dicht befestigte Filtermembran 2 gefiltert wird, durch die Stirnwand 7 des nächsten Elementes 1 b in dieses eintritt und dann dieses durch die Außenwandöffnungen 3 in den Gehäuseraum oder Außenkammer 16 verläßt und durch die hier als Ableitung geschaltete zweite Fluidleitung 14 gefiltert ausgeleitet wird. Bei der in Fig. 2 sehr schematisiert dargestellten Filtervorrichtung 10 ist zur Verdeutlichung das Filtermaterial 2 stark vergrößert und insbesondere verdickt dargestellt - dies entspricht keineswegs einer technischen Realisierung der Erfindung, sondern dient nur dem besseren Verständnis. Wie zu erkennen ist, sind die Elemente 1 b innen, d. h. zum Zuströmrohr 12 zu geschlossen, und die Elemente 1a weisen eine Öffnung 4 zum Zuströmrohr 12 hin auf.

Das zu filtrierende Fluid strömt nun in dem in Fig. 2 dargestellten Beispiel durch die Öffnungen der zu dem Zuströmrohr 12 hin offenen Elemente 1a, dann, unter Strömungsumlenkung, im wstl. um 90° durch das Filtermaterial 2, und sodann wieder unter Strömungsumlenkung, im wstl. wieder unter 90° durch weitere Elemente 1b, die nach außen, d. h. zum Filtratraum 16 hin offen sind. Die Elemente 1a,b werden durch durch obere und untere Einfassungen bzw. Abdeckkappen 28 bzw. 30 gehaltert.

Das zu filtrierende Fluid strömt von der ersten Fluidleitung 12 in die jeweiligen Filterelemente 1a, genauer mündet die Zuführleitung 12 in eine Filterinnenleitung 18, die auch durch die jeweiligen, zu ihr hin geöffneten oder nicht hin geöffneten Innenringwände 8 aller Filterelemente 1a,1b gebildet sein kann.

Wie genauer in Fig. 3, die eine perspektivische Ansicht des Innenfilterbereichs ohne Gehäuse 20 darstellt, zu erkennen ist, ist die erfindungsgemäße Filtervorrichtung 10 im wstl. durch Elemente 1a, 1b, 11a, 11b, 22a, 22b aufgebaut, nämlich durch im wstl. kreisringförmige Elemente, die eine Außenringwand 9 und eine Innenringwand 8 sowie Stirnflächen 7, also jeweils einen Elementboden und eine Elementdecke jeweils mit Öffnungen aufweisen. Die Außenringwand 9 und die Innenringwand 8 werden bei dem in Fig.2 dargestellten Ausführungsbeispiel durch Siebelementböden bzw. -decken 7, zusammengehaltert, die jeweils mit der Außenringwand 9, wie in der Zeichnung auch zu erkennen sind, formschlüssig verbunden sind.

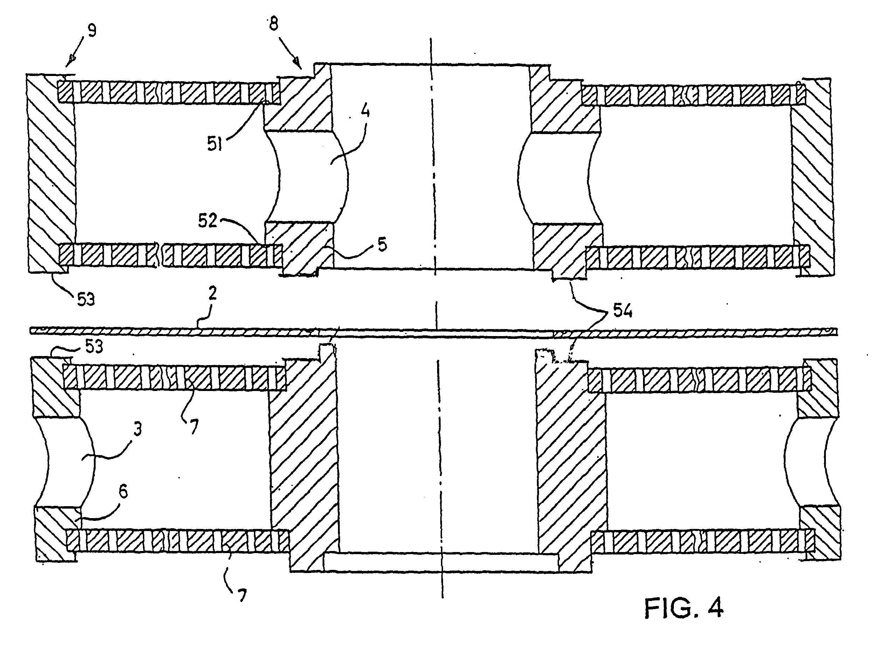

Wie weiter in Fig. 3 und auch Fig. 4 dargestellt, sind hier als Einströmöffnungen geschaltete Innenringwandöffnungen 4 und als Ausströmöffnungen betriebene Außenringwandöffnungen 3 bohrungsartig in der Außenringwand 9 bzw. der Innenringwand 8 ausgebildet.

In Fig. 4 ist ersichtlich, daß auf der Außenringwand 9 und der Innenringwand 8 umlaufende unebene Halteflächen 53 bzw. 54 ausgebildet sind, auf denen das Filtermaterial 2 mit seinem Randbereich durchgehend aufliegt. Da Filtermaterial 2 wird so zwischen zwei Filterelementen 1a, 1b, die jeweils auch an ihrer unteren Seite entsprechende sandgestrahlte Dichtflächen 53 und 54 aufweisen, vollkommen abdichtend gehalten,

In Fig. 4 sind jeweils zwei Auströmöffnungen 3 bzw. Einströmöffnungen 4 zu erkennen, jedes Filterelement kann aber mehr oder weniger Ausströmöffnungen bzw. Einströmöffnungen besitzen.

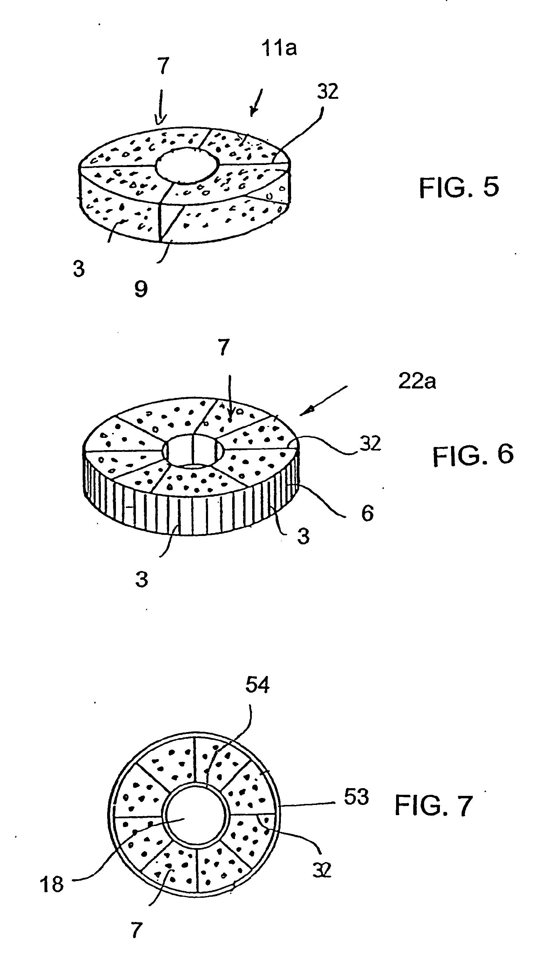

In Fig. 3 und 9 ist eine Ausführungsform einer Filtermembran 2 dargestellt, die erfindungsgemäß häufig als Filtermaterial 2 Verwendung findet. Diese Filtermembran ist hier eine PTFE-Membran und besteht aus einer Schicht. Wie aus der perspektivischen Darstellung in Fig. 3 zu erkennen ist, weist das Filtermaterial 2 bzw. die Filtermembran eingeprägte Vertiefungen im Randbereich auf, deren Vorteilhaftigkeit schon weiter vorne beschrieben ist. In den Fig. 5 bis 7 sind alternative Ausführungsformen der Filterelemente dargestellt. Wie schon aus der vorstehenden Beschreibung hervorgeht, sind für eine erfindungsgemäße Filtervorrichtung 10 zwei zusammenarbeitende unterschiedliche Elemente 1a, 1b oder 11a, 11b, oder 22a, 22b notwendig.

Das in Fig. 5 dargestellte Filterelement 11a ist zum Gehäuseraum 16 hin mit Öffnungen 3 versehen, die eine beliebige, mit der Stabilität des Filterelementes zu vereinbarende Form besitzen können. Hier sind sie als Löcher ausgebildet. Durch diese Öffnungen 3 ist ein freier Austritt von Filtrat, das aus dem Filtermaterial 2 in das nach außen offene Filterelement 11 b durch die Öffnungen in der Stirnfläche 7 des Filterelementes 1a strömt, möglich. Die Filterelemente nehmen das zu filternde, noch nicht gereinigte Fluid auf und leiten es durch Öffnungen in ihren Stirnflächen 7 in das Filtermaterial 2. Da die Filterelemente 11 a bei dieser Fließrichtung ständig Verschmutzungen ausgesetzt sind, kann es notwendig sein, die Elemente 1a separat zu reinigen, oder auch zu ersetzen bzw. aus einem Material herzustellen, welches gegenüber Verunreinigungen unempfindlich ist. Die nach außen offenen Filterelemente 11b, die bei dieser Flußrichtung mit gefiltertem Fluid in Kontakt kommen, können dagegen weniger reinigungsanfällig sein und ggf. aus einem preiswerteren, nicht so resistenten Material gefertigt sein. Dabei kann es zur Aufnahme des auf die Filterelemente ausgeübten Druckes erstrebenswert sein, radiale/sternförmige Stützwände 32 in den einzelnen Elementen 11a, 11b, 1a, 1b, 22a, 22b, vorzusehen, welche eine Verformung der Filterelemente in Richtung der Filterhauptachse vermeiden, durch welche Undichtigkeiten der Anordnung hervorgerufen werden könnten. Die Zahl der radialen Stützwände 32 ist nicht sehr kritisch, aus Gründen der erhöhten mechanischen Beanspruchung kann das Vorsehen von Stützwänden 32 insbesondere bei stark geschwächten tragenden Ringwänden 8, 9 wie in Fig. 6 dargestellt, vorteilhaft sein.

In Fig. 5ist eine weitere bevorzugte Ausführungsform der Öffnungen in den Ringwandflächen der Filterelemente 22b als radiale Schlitze gezeigt, welche aus bzw. Material- bzw. Widerstandsgründen erstrebenswert sein kann. Selbstverständlich können auch kreisförmige Öffnungen oder jede anderen geeignete Art von Öffnungen in den Stirnflächen 7 der Filterelemente 1 a, 1 b, 11 a, 11 b, 22a, 22b vorgesehen sein, wobei der Größe und Form der Öffnungen lediglich durch die Stabilität der Filterelemente Grenzen gesetzt sind. Es ist aber auch möglich, die Öffnungen in den Stirnflächen 7, wie in Fig. 8 gezeigt, als Schlitze auszubilden.

Eine Abdichtung des Filtermaterials 2 gegen die Innen- und Außenleitung ist notwendig. Diese erfolgt dadurch, daß das Filtermaterialblatt 2 durch den Druck der Filterelemente im Rand- und Dichtbereich durch die aufgerauhten Dichtflächen 53, 54 so stark komprimiert und gehalten wird, daß ein Durchfluß von Fluid nicht möglich ist.

In Fig. 10 ist nun der Einsatz der erfindungsgemäßen Filtermembran 2 detailliert unter einem Anström-Filterelement 1b mit Stützwänden gezeigt. Zur Vereinfachung der Darstellung wurde die obere Stirnfläche des Anström-Filterelementes weggelassen. Das zu filternde Fluid tritt hier - verdeutlicht durch die Pfeile - durch offene Seitenwände der Filterelementscheibe 1b aus der Gehäusekammer 16 ein, gelangt durch die siebartige Perforation in der unteren Stirnfläche 7 des Elementes 1b, dem Elementboden, in das darunterliegenden Filtermaterialblatt 2, verläßt das Filtermaterial gefiltert und läuft durch die mit Öffnungen versehene Stirnfläche 7 in ein bauähnliches Filterelement 1a, welches zur Filterinnenleitung 18 hin offen und zur Gehäusekammer 16 hin geschlossen ist, zur Filterinnenleitung 18 und von dort in die erste Fluidleitung 12. Das untere Filterelement ist hier schematisch quasi als Endelement dargestellt, weist also an seinem Boden keine Öffnungen auf. Derartige Filteranordnungen können in beliebigen Höhen übereinander gestapelt werden, wobei zum Erzielen einer zufriedenstellenden Filterung die Abdichtung der Filtermaterialien gegenüber den Filterelementdichtflächenn wesentlich ist, damit kein ungereinigtes Fluid die Membranen 2 umgehen kann.

## Patentansprüche

1. Filtervorrichtung (10) mit
im wstl. hohlzylinderförmigen, abwechselnd übereinandergestapelten, Innenringwandöffnungen (4) aufweisenden Filterelementen (1a, 11a, 22a) und Außenringwandöffnungen (3) aufweisenden Filterelementen (1b, 11b, 22b);
einem Außengehäuse (20): das mit Außenringwänden (9) der Filterelemente (1a,1b, 22a, 22b, 11a,11b) eine Außengehäuse-Fluidkammer (16) bildet, die in einer zwei-ten Fluidleitung (14) endet;
einer Filterinnenleitung (18), die durch die Innenringwände (8) der Filterelemente (1a,1b,22a,22b,11a,11b) gebildet ist und durch die Innenringwandöffnungen (4) mit Filterelementen (1a,11a,22a) sowie einer ersten Fluidleitung (12) verbunden ist;
zwischen jeweils zwei dieser-Filterelemente (1a,1b; 11a,11b;22a,22b) angeordnetem im wstl. ringförmigem Filtermaterial (2),
wobei die Filterelemente (1a, 1b) im wesentlichen hohlzylinderförmig sind und eine Innenringwand (8), eine Außenringwand (9) sowie eine obere und eine untere Stirnfläche (7) mit Öffnungen aufweisen, wobei die Filterelemente entweder an ihrer radialen Außenwand (6) oder Innenwand (5) Öffnungen (3,4) aufweisen,
wodurch Flüssigkeitsleitung von der Innenleitung (18) des Filters durch Innenwandöffnungen (4) in der Innenwand (5) der hohlzylinderförmigen Filterelemente (1a) und durch die stirnseitigen Öffnungen derselben durch das ringförmige Filtermaterial (2) und durch die stirnseitigen Öffnungen in das nächste, Außenöffnungen aufweisende hohlzylinderförmige Element (1 b) und über dessen im Außenwand (6) angeordnete Öffnungen (3) in den Filtratraum bzw. Gehäusekammer (16) bzw. in Strömungsumkehr eine Fluidleitung von Außen (16) zur Innenleitung (18) herstellbar ist,
einem Deckelteil (28) zum dichten Abschluß des obersten Filterelementes; und einem Bodenteil (30) zum Abschluß des untersten Filterelementes;
**dadurch gekennzeichnet dass**
die Stirnflächen (7) der Filterelemente (1a, 1 b) im wesentlichen plane periphere Außen- und Innendichtflächen (53, 54) aufweisen, die bei Aufeinanderliegen der Filterelemente (1a,1b;11a,11b;22a,22b) unter Einklemmen von Filtermaterial dazwischen übereinander zu liegen kommen und uneben sind.

2. Filtervorrichtung nach Anspruch 1, **dadurch gekennzeichnet, daß** die Unebenheiten der Außen- und Innendichtränder im wesentlichen gleicher Rauhigkeit sind.

3. Filtervorrichtung nach Anspruch 1 oder 2, **dadurch gekennzeichnet, daß** die Unebenheit der Filterelemente durch Sandstrahlen, Kugelstrahlen, Laserbearbeitung, Fräsen hergestellt ist.

4. Fltervorrichtung nach einem der vorangehenden Ansprüche, **dadurch gekennzeichnet, daß** die Filterelemente, das Gehäuse sowie das Deckel- und Bodenteil zumindest teilweise aus Kunststoff hergestellt sind.

5. Filtervorrichtung nach einem der vorangehenden Ansprüche, **dadurch gekennzeichnet, daß** die Filterelemente, das Gehäuse sowie das Deckel- und Bodenteil zumindest teilweise aus Metall, wie Stahl, hergestellt sind.

6. Filtervorrichtung nach Anspruch 1 oder 2, **dadurch gekennzeichnet, daß** in Strömungsrichtung dem Filtermaterial (2) zumindest ein Siebkörper vor- oder nachgeschaltet ist.

7. Filtervorrichtung nach einem der vorangehenden Ansprüche, **dadurch gekennzeichnet, daß** das zylinderförmige Element (1) mehrteilig aufgebaut ist, zumindest aus einem innen- und einem Außenring (8, 9) sowie gegebenenfalls einem oder mehreren Siebkörpern.

8. Filtervorrichtung nach Anspruch 3, **dadurch gekennzeichnet, daß** zumindest ein Siebkörper auf die Stirnfläche (7) auflegbar ist.

9. Filtervorrichtung nach einem der Ansprüche 6 bis 8, **dadurch gekennzeichnet, daß** das Filtermaterial (2) mit Abstand zum Siebkörper angeordnet ist.

10. Filtervorrichtung nach einem der Ansprüche 1 bis 8, **dadurch gekennzeichnet, daß** in der Innenleitung (18) ein Zuganker, auf dem die hohlzylinderförmigen Filterelemente (1a,1b; 11a,11b;22a,22b) und das ringförmige Filtermaterial (2) aufgesteckt sind und der in der oberen Abdeckkappe und der unteren Abdckkappe (30) befestigt ist und so den Filterelement/Filtermaterialstapel verspannt, ausgebildet ist.

11. Filtervorrichtung nach Anspruch 9, **dadurch gekennzeichnet, daß** die zylinderförmigen Filterelemente (1a,1b; 11a,11b;22a,22b) radial zur Achse der Innenleitung (18) und senkrecht zu den Stirnflächen (7) der Filterelemente (1) verlaufende Stützwände (32) aufweisen.

12. Filtervorrichtung nach einem der vorangehenden Ansprüche, **dadurch gekennzeichnet, daß** die Öffnungen mindestens einer Stirnfläche (7) der hohlzylinderförmigen Filterelemente (1a,1b; 11a, 11b; 22a, 22b) lochartig und/oder schlitzförmig und/oder siebartig sind.

13. Filtervorrichtung nach einem der vorangehenden Ansprüche, **dadurch gekennzeichnet, dass** das im Wesentlichen ringförmige Filtermaterial einen Haltebereich anderer Zusammensetzung als im filternden Bereich aufweist.

14. Filtervorrichtung nach einem der vorangehenden Ansprüche, **dadurch gekennzeichnet, dass** der Randbereich des ringförmigen Filtermaterials aufgerauht ist.

15. Filtervorrichtung nach einem der vorangehenden Ansprüche, **dadurch gekennzeichnet, dass** das flächige Filtermaterial einzeln oder in Kombination Keramik, Metall, natürliche oder synthetische Polymere, Kunstharz-Ionenaustauscher, Polymere halogenierte Kohlenwasserstoffe, Teflon, Porzellan, Glas, Metall, Papier, Cellulose, Filz, Leder, Asbest, Glas, Sägemehl, Bimsstein, Titandioxid, aufweist und gegebenenfalls zwei- oder mehrschichtig ist.

16. Filtervorrichtung nach einem der vorangehenden Ansprüche, **dadurch gekennzeichnet, dass** das ringförmige Filtermaterial (2) regenerierbar ist.

## Claims

1. Filtering device (10) with
basically hollow cylinder shaped filtering elements (1a, 11a, 22a) with alternatively overlapping inner ring openings (4) and filtering elements (1b) with outer ring openings (3);
an exterior enclosure (20) which constitutes together with the outer ring walls (9) of the filtering elements (1a, 1b, 22a, 11a) an exterior casing fluid chamber (16) which ends in a second pipeline for fluids (14);
an interior filter pipeline (18) constituted through the inner ring walls (8) of the filtering elements (1a, 1b, 22a, 11a) connected through the wall openings of the inner rings (4) to the filtering elements (1a, 11a, 22a) as well as to a pipeline for fluids (12);
a basically ring shaped filtering material (2) placed between each with two of these filtering elements (1a, 1b, 11a),
whereas the filtering elements (1a, 1b) are basically hollow cylinder shaped and have an inner ring wall (8) and an outer ring wall (9) as well as an upper and a lower front surface (7) with openings, whereas the filtering elements have openings (3, 4) either on the radial outer wall (6) or on the inner wall (5),
whereby the pipeline for fluids can be established from the inner pipeline (18) of the filter through the inner wall openings (4) in the inner wall (5) of the hollow cylinder shaped filtering elements (1a) and through the front openings of the same through the ring shaped filtering material (2) and through the front openings into the next hollow cylinder shaped element (1b) with outer openings and through its openings (3) placed in the outer wall (6) into the filtering chamber and respectively in reversed stream a fluid pipeline from the outer pipeline (16) into the inner pipeline (18);
a lid part (28) for the hermetical sealing of the upper filtering element and a bottom part (30) for the sealing of the lowest filtering element,
**characterised in that** the front surfaces (7) of the filtering elements (1a, 1b) show basically plane peripheral outer and inner sealing surfaces (53, 54) which are clamped in-between when the filtering elements (1a, 1b, 11a) lay over one another, and get to lay one over the other and are uneven.

2. Filtering device according to claim 1, **characterised in that** the unevenness of the outer and inner sealing borders have basically similar roughness.

3. Filtering device according to claims 1 and 2, **characterised in that** the roughness of the filtering elements is made by sandblasting, grit blasting, laser shaping, milling.

4. Filtering device according to one of the previous claims, **characterised in that** the filtering elements, the body as well as the lid and the bottom part are manufactured at least partially of synthetic material.

5. Filtering device according to one of the previous claims, **characterised in that** the filtering elements, the body as well as the lid and the bottom part are manufactured at least partially of metal, like steel.

6. Filtering device according to claim 1 or 2, **characterised in that** at least one sieve body is connected before or after the filtering material.

7. Filtering device according to one of the previous claims, **characterised in that** the cylinder shaped filtering element (1) is manufactured of several parts, at least of an inner and an outer ring (8, 9) as well as if applicable one or more sieve bodies.

8. Filtering device according to claim 3, **characterised in that** at least one sieve body can be placed on the front surface (7).

9. Filtering device according to one of the claims 6 to 8, **characterised in that** the filtering material (2) is disposed at a distance from the sieve body.

10. Filtering device according to one of the claims 1 to 8, **characterised in that** an tie-rod or is built in the inner pipeline on which the hollow cylinder shaped filter elements (1a, 1b, 11a, 11b, 22a, 22b) and the ring shaped filtering material (2) are put and which is fixed in the upper covering lid and the lower covering lid (30) and thus braces the filtering element / filtering elements pile.

11. Filtering device according to claim 9, **characterised in that** the cylinder shaped filtering elements (1a, 1b, 11a) show protection walls (32) running radially to the axis of the inner pipeline (18) and vertically to the front surfaces (17) of the filtering elements (1).

12. Filtering device according to one of the previous claims, **characterised in that** the opening of at least one front surface (7) of the hollow cylinder shaped filtering elements (1a, 1b, 11a, 22b) are hole shaped and / or slot shaped and / or sievelike.

13. Filtering device according to one of the previous claims, **characterised in that** the basically ring shaped filtering material has a berth of another composition as in the filtering area.

14. Filtering device according to one of the previous claims, **characterised in that** the border area of the ring shaped filtering material is roughened.

15. Filtering device according to one of the previous claims, **characterised in that** the laminar filtering material is single or in combination with ceramics, metal, natural or synthetic polymers, synthetic resin ion exchanger, polymer halogenated hydrocarbons, Teflon, porcelain, glass, metal, paper, cellulose, felt, leather, asbestos, glass, saw dust, pumice stone, titanium, dioxide and where applicable it has two or more layers.

16. Filtering device according to one of the previous claims, **characterised in that** the ring shaped filtering material (2) is reclaimable.

## Revendications

1. Dispositif de filtrage (10) avec :
- des éléments de filtrage (1a, 11a, 22a) présentant des orifices dans la paroi annulaire intérieure (4) et des éléments de filtrage (1b) présentant des orifices dans la paroi annulaire extérieure (3), en essence de forme cylindrique tubulaire, empilés de manière alternante l'un sur l'autre;
- un boîtier extérieur (20) qui forme ensemble avec les parois annulaires extérieures (9) des éléments de filtrage (1a, 1b, 11a, 22a) une chambre pour fluide du boîtier extérieur (16), qui se termine dans une deuxième conduite pour fluide (14);
- une conduite intérieure du filtre (18) formée par les parois annulaires intérieures (8) des éléments de filtrage (1a, 1b, 11a, 22a) et raccordée, par les orifices de la paroi annulaire intérieure (4) avec les éléments de filtrage (1a, 11a, 22a) aussi bien qu'avec une première conduite pour fluide (12);
- un matériel de filtrage (2) en essence annulaire, disposé entre chaque paire formée d'entre ces éléments de filtrage (1a, 1b, 11a, 22a),
- où les éléments de filtrage (1a, 1b) sont en essence de forme cylindrique tubulaire et présentent une paroi annulaire intérieure (8), une paroi annulaire extérieure (9) aussi bien qu'une surface frontale (7) supérieure et l'une inférieure, avec des orifices, où les éléments de filtrage présentent des orifices radiaux (3, 4) soit dans la paroi extérieure (6) soit dans la paroi intérieure (5) de ceux-ci,
- par lequel, on peut obtenir une conduite de fluide du côté de la conduite intérieure (18) du filtre par les orifices (4) de la paroi intérieure (5) des éléments de filtrage (1a) de forme cylindrique tubulaire et par les orifices frontaux des mêmes éléments par le matériel de filtrage (2) annulaire et par les orifices frontaux du suivant élément (1b) de forme cylindrique tubulaire, présentant des orifices extérieurs, et par celui-ci dans les orifices (3) disposés dans la paroi extérieure (6) dans la chambre du fluide filtré respectivement la chambre du boîtier (16), respectivement une conduite de fluide en sens inverse, du côté d'extérieur (16) vers la conduite intérieure (18),
- un élément de recouvrement (28) pour la fermeture étanche du dernier l'élément de filtrage supérieur; et
- un élément de fond (30) pour la fermeture du dernier élément de filtrage inférieur;
**caractérisé en ce que**
- les surfaces frontales (7) des éléments de filtrage (1a, 1b) présentent des surfaces périphériques d'étanchéité intérieures et extérieures (53, 54) en essence horizontales, qui à l'empilage des éléments de filtrage (1a, 1b) se superposent l'une sur l'autre par la fixation entre elles du matériel de filtrage et elles sont avec des proéminences.

2. Dispositif de filtrage selon la revendication 1, **caractérisé en ce que**, les proéminences des bords d'étanchéité intérieurs et extérieurs ont en essence la même rugosité.

3. Dispositif de filtrage selon la revendication 1 ou 2, **caractérisé en ce que**, les proéminences des éléments de filtrage sont réalisées par sablage, sablage à billes, traitement à laser, fraisage.

4. Dispositif de filtrage selon l'une des revendications antérieures, **caractérisé en ce que**, les éléments de filtrage, le boîtier aussi bien que l'élément de recouvrement et de fond sont réalisés au moins partiellement en matière plastique.

5. Dispositif de filtrage selon l'une des revendications antérieures, **caractérisé en ce que**, les éléments de filtrage, le boîtier aussi bien que l'élément de recouvrement et de fond sont réalisés au moins partiellement de métal, comme serait l'acier.

6. Dispositif de filtrage selon la revendication 1 ou 2, **caractérisé en ce que**, au moins un corps de tamis est couplé avant et après le matériel de filtrage (2), dans la direction d'écoulement.

7. Dispositif de filtrage selon l'une des revendications antérieures, **caractérisé en ce que**, l'élément (1) de forme cylindrique est composé de plusieurs composants, au moins d'un anneau intérieur et l'un extérieur (8, 9) aussi bien que le cas échéant d'un ou plusieurs corps de tamis.

8. Dispositif de filtrage selon la revendication 3, **caractérisé en ce que**, au moins un corps de tamis peut être assis sur la surface frontale (7).

9. Dispositif de filtrage selon l'une des revendications 6 à 8, **caractérisé en ce que**, le matériel de filtrage (2) est disposé à distance à l'égard du corps de tamis.

10. Dispositif de filtrage selon l'une des revendications 1 à 8, **caractérisé en ce que**, dans la conduite intérieure (18) est réalisée une barre, sur laquelle sont introduits les éléments de filtrage (1a, 1b; 11a, 11b; 22a, 22b) de forme cylindrique tubulaire et le matériel de filtrage (2) annulaire, et qui est fixé dans le couvercle de recouvrement supérieur et dans le couvercle de recouvrement inférieur (30), serrant ainsi la pile, élément de filtrage/matériel de filtrage.

11. Dispositif de filtrage selon la revendication 9, **caractérisé en ce que**, les éléments de filtrage (1a, 1b; 11a, 22a) de forme cylindrique présentent des parois d'appui (32) déroulées en direction radiale à l'égard de l'axe de la conduite intérieure (18) et perpendiculairement sur les surfaces frontales (7) des éléments de filtrage (1).

12. Dispositif de filtrage selon l'une des revendications antérieures, **caractérisé en ce que**, les orifices au moins d'une surface frontale (7) des éléments de filtrage (1a, 1b; 11a, 22a) de forme cylindrique tubulaire, sont sous forme de perforations et/ou de fentes et/ou de tamis.

13. Dispositif de filtrage selon l'une des revendications antérieures, **caractérisé en ce que**, le matériel de filtrage en essence annulaire, présente une zone de fixation d'autre composition que celle de la zone de filtrage.

14. Dispositif de filtrage selon l'une des revendications antérieures, **caractérisé en ce que**, la zone de bord du matériel de filtrage annulaire est effilochée.

15. Dispositif de filtrage selon l'une des revendications antérieures, **caractérisé en ce que**, le matériel de filtrage lisse présente séparément ou en combinaison, céramique, métal, polymères naturels ou synthétiques, changeur d'ions de résine synthétique, polymères d'hydrocarbures halogénées, téflon, porcelaine, verre, métal, papier, cellulose, feutre, cuir, asbeste, verre, sciure, pierre ponce, dioxyde de titane, et le cas échéant il est formé de deux ou trois couches.

16. Dispositif de filtrage selon l'une des revendications antérieures, **caractérisé en ce que**, le matériel de filtrage (2) annulaire peut être régénéré.
